# EUROPEAN PATENT APPLICATION

(11) **EP 3 726 400 A1**
(43) Date of publication of application: **21.10.2020**
(21) Application number: 19170074.9
(22) Date of filing: 18.04.2019
(51) Int. Cl.: G06F 17/27

(54) **METHOD FOR DETERMINING AT LEAST ONE ELEMENT IN AT LEAST ONE INPUT DOCUMENT**

(71) Applicant: Siemens Aktiengesellschaft, 80333 München (DE)
(72) Inventor: Buckley, Mark, 81829 München (DE)

(57) **Abstract**

The invention relates to a computer-implemented method for determining at least one element (20) in at least one input document (10), wherein the at least one element is associated with the at least one input document (10) comprising the steps of Providing the at least one input document (10), comprising text (12) and metadata (14); preprocessing the text (12) of the at least one input document (10) into processed text depending on a plurality of text fragments of the text, the position and/or arrangement of the plurality of text fragments of the text (12); determining at least one score (22) for the at least one element (20) as output data using machine learning on the basis of the at least one document with the processed text (12) and unprocessed metadata (14); wherein the at least one score is the probability that the at least one input document (10) comprises the at least one element (20). Further, the invention relates to a corresponding computer program product and system.

## Description

### 1. Technical field

The present invention relates to a computer-implemented method for determining at least one element in at least one input document. Further, the invention relates to a corresponding computer program product and system.

### 2. Prior art

Nowadays, with the development of communication networks, including the Internet, the extraction or retrieval of relevant information from documents increasingly gains importance. The amount of data continuously increases as well as the need for classifying the huge amount of documents in an efficient and reliable manner.

In particular, there is an increasing need to automatically allocate patent documents, e.g. granted patents to their categories. Categories can be e.g. the technical fields or any other elements, see further below. In other words, the huge amount of patents has to be filtered and classified.

The International Patent Classification ("IPC") is a known hierarchical patent classification system. The IPC is usually used all over the world to classify the content of patents in a uniform manner. Patent documents are each assigned to at least one classification symbol. The classification symbol indicates the subject or specific area of technology to which the invention relates. The patent documents can be also assigned to further classification symbols and indexing codes to give further details of the contents. The classification symbols are assigned by the examiners of the Patent Office in accordance with classification rules.

Each classification symbol is of the form A01B 1/00 (which represents "hand tools"). The first letter represents the "section" consisting of a letter from A ("Human Necessities") to H ("Electricity"). These classification symbols and classification searches can be used to search for patent documents which are related to a specific technology field.

Moreover, known search engines, such as Google Patents and Espacenet, can be used the search for patent documents using keywords or search terms.

It is therefore an objective of the invention to provide a method for determining at least one element in at least one input document, which is more efficient and more reliable.

### 3. Summary of the invention

This problem is according to one aspect of the invention solved by computer-implemented method for determining at least one element in at least one input document, wherein the at least one element is associated with the at least one input document comprising the steps of:
a. Providing the at least one input document, comprising text and metadata;
b. Preprocessing the text of the at least one input document into processed text depending on a plurality of text fragments of the text, the position and/or arrangement of the plurality of text fragments of the text; and
c. Determining at least one score for the at least one element as output data using machine learning on the basis of the at least one document with the processed text and unprocessed metadata; wherein
   the at least one score is the probability that the at least one input document comprises the at least one element.

Accordingly, the invention is directed to a method for determining at least one element in at least one input document. The element can be any kind of element which is related to the input document and is of interest for the application or user.

The input document is in particular a machine-readable document, such as PDF or Word document which can be processed by any computing unit in an automated and efficient manner. The input document comprises the text, such as the main text or text body describing the content of the input document. Further, the input document comprises metadata, such as additional information, including dates or identification tags.

Referring to the above, the input document is in particular a patent-related document, such as a granted patent. Accordingly, the text of the input document describes the core of the invention in detail. The element to be determined can be the label, the department, any other category or element of interest, e.g. for routing, categorizing or prioritizing the incoming granted patent in view of the responsible department.

In a first step, the input document is received, in particular a plurality or stream of documents.

In a second step, the raw text of the input document is preprocessed into processed text. The reason is that just the processed text or the numeric representation of the text can be further processed in an automated and efficient manner and can be used as input for step c. In particular, the raw text is processed into a respective word index sequence as processed text, resulting in one respective word index sequence for each input document. Alternatively, any other kind of numeric representation can be considered.

Thus, the input document comprises the processed text and the unprocessed metadata after step b.

In a last step, a score is computed for the element as output data using machine learning on the basis of the input document. Therefore, in particular a trained classification model or machine-learning classifier is applied using machine learning. The classification model is untrained and used in the training process, whereas the classifier is used after training in the running system or method according to the invention.

The score is the probability that the at least one input document comprises the element. In other words, the most likely element or the element with the highest probability is determined using a predicted probability distribution over the elements, wherein the elements were used as further input in the classification model during the training process in the training input data set.

Referring to the exemplary patent as input document, the most likely department occurring in the patent is identified. In addition, the less likely or elements with lower probability can also be determined. For example, the elements with scores exceeding a predefined threshold can be outputted.

Contrary to prior art, the machine learning model is applicable on any kind of input data or input data with diverse data elements, including text data and meta-data. In other words, the machine learning model can handle text content as well as single-value type or multiple-value type data.

Moreover, the method according to the invention ensures an improved efficiency and accuracy. The resulting determined element and score are more reliable compared to prior art.

Moreover, the resulting output data provides a basis for more efficient subsequent processes since the subsequent analysis can be built on the output data. In other words, other applications or algorithms can focus on the identified input documents which are most likely to contain the elements.

In one aspect the at least one input document is a granted patent, patent application or any other patent-related document. Accordingly, the input document can be any kind of document, including unstructured documents, structured documents or semi-structured documents. Preferred documents are patent-related documents and publications.

In another aspect the metadata comprises an element selected from the group, comprising:
a patent application number, a date of publication and mention of the grant of the patent, a date of filing, a proprietor, an inventor, an applicant, a date of publication of application and any other patent-related information. The metadata depends on the input document. The identification tags of the patent deviate from the identification tags of other technical publications for journals. For example, some relevant names or persons of the patent are applicant, inventor and proprietor, whereas the relevant names or persons of the publication are the authors. Thus, the method can be applied in a flexible manner according to the specific application case, underlying technical system and user requirements.

In another aspect preprocessing the text of the at least one input document into processed text depending on a plurality of text fragments of the text, the position and/or arrangement of the plurality of text fragments of the text comprises the intermediate steps
- transforming the text of the at least one input document into at least one corresponding text fragment sequence,
- determining the plurality of text fragments of the at least one corresponding text fragment sequence,
- assigning a respective unique index to each text fragment of the plurality of text fragments, and
- transforming the at least one corresponding text fragment sequence into at least one corresponding text fragment index sequence using the unique indices of the plurality of text fragments, wherein the at least one corresponding text fragment index sequence is the processed text.

Accordingly, for each input document a respective text fragment sequence is computed resulting in at least one text fragment sequence. Then, the respective vocabulary can be derived from the text fragment sequence, wherein the vocabulary is the set of text fragments, in particular words, which appear at least once in the input document. Each text fragment is allocated to a respective unique index, especially an integer index. Thus, each text fragment sequence can be converted into a respective text fragment index sequence.

In another aspect the text fragment is a word, the at least one text fragment sequence is a word sequence and the at least one text fragment index sequence is a word index sequence. Accordingly, the text fragment is a word. Alternatively, other tokens or letter strings can be used, such as sentences. The words of a text can be easily and efficiently concatenated and tokenized into a sequence of words. The concatenated text can be advantageously split on whitespace and removing punctuation in an efficient manner.

In another aspect the machine learning is a learning-based approach selected from the group, comprising
neural network, support vector machine, logistic regression, multilayer perceptron and random forest.

Thus, the method can be applied in a flexible manner according to the specific application case, underlying technical system and user requirements. Neural networks have proven to be advantageous since they are applicable on input documents with diverse and distinct input data. The text is sequence information, whereas the metadata comprises numbers and/or letters. Thus, one neural network is sufficient to process the input document and perform the determination of the element in an efficient and reliable manner.

In another aspect the method further comprises the step of performing at least one action depending on the determined at least one score.

In another aspect the at least one action is performed, if the at least one score exceeds a predefined threshold.

In another aspect the action is an element selected from the group comprising:
- Outputting the at least one input document at least in part, the output data at least in part and/or any other related notification;
- Storing the at least one input document at least in part, the output data at least in part and/or any other related notification;
- Displaying the at least one input document at least in part, the output data at least in part and/or any other related notification; and
- Transmitting the at least one input document at least in part, the output data at least in part and/or any other related notification to a computing unit for further processing.

Accordingly, the input data, data of intermediate method steps and/or resulting output data can be further handled. One or more actions can be performed. The action can be equally referred to as measure.

The actions can be triggered depending on the predefined threshold, according to which, the score has to meet and/or exceed a predetermined threshold. These actions can be performed by one or more computing units of the system. The actions can be performed gradually or simultaneously. Actions include e.g. storing and processing steps. The advantage is that appropriate actions can be performed in a timely manner.

First, the determined element with the score can be outputted and displayed to a user by means of a display unit, for example the most likely department of a patent or departments with scores exceeding a predetermined threshold. The user can check the score and confirm one or more further actions, which are additionally provided to the user for selection and are selected by the user. The additional check or verification can include a manual scan of the granted patent with regard to the most likely department by the user. The user confirms the transmission of the patent as selected action and the most likely department to a computing unit after the additional check. After reception of the transmitted patent by the computing unit, the computing unit can process the received data, for example forward the patent to the determined department. The advantage is that the additional check by the user further improves the reliability of the output data, especially the score and the subsequent actions to be required.

A further aspect of the invention is a computer program product directly loadable into an internal memory of a computer, comprising software code portions for performing the steps according to any one of the preceding claims when said computer program product is running on a computer.

A further aspect of the invention is a system for determining at least one element in at least one input document, wherein the at least one element is associated with the at least one document, comprising:
a. Receiving unit for providing the at least one input document, comprising text and metadata;
b. Preprocessing unit for preprocessing the text of the at least one input document into processed text depending on a plurality of text fragments of the text, the position and/or arrangement of the plurality of text fragments of the text; and
c. Machine learning model for determining at least one score for the at least one element as output data using machine learning on the basis of the at least one document with the processed text and unprocessed metadata; wherein
   the at least one score is the probability that the at least one input document comprises the at least one element.

### 4. Short description of the drawings

In the following detailed description, presently preferred embodiments of the invention are further described with reference to the following figures:
- Fig. 1: illustrates a flowchart of the method according to the invention.
- Fig. 2: illustrates the preprocessing step of the text of the input document into processed text according to an embodiment of the present invention.
- Fig. 3: illustrates an architecture of the machine learning model according to an embodiment of the invention.

### 5. Detailed description of preferred embodiments

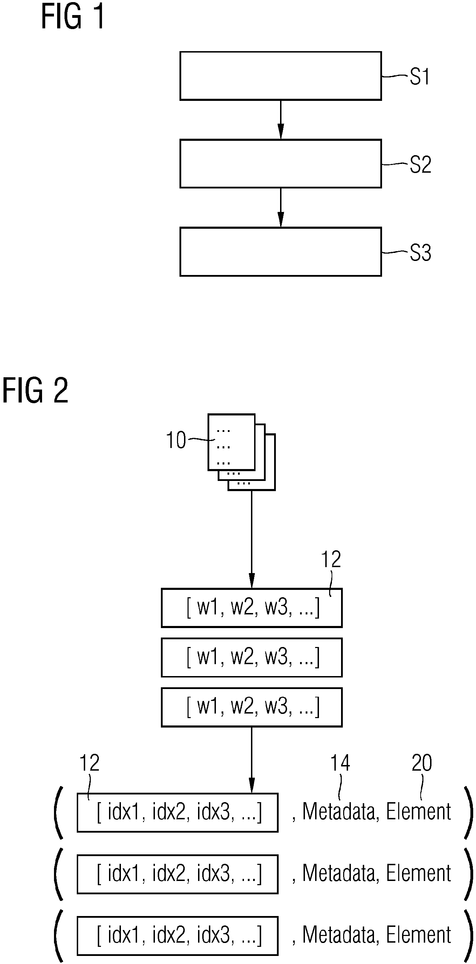

Fig. 1 illustrates a flowchart of the method according to the invention with the method steps S1 to S3. The method steps S1 to S3 will be explained in the following in more detail.

### Input document 10

The input document 10 has text data 12 and metadata 14. Preferably, the input document 10 is a granted patent. The metadata 14 can comprise one or more related data elements or fields, such as date, year and/or IPC tags of the granted patent.

Accordingly, a set or stream of such input documents 10 without elements is used as input for the method according to the invention during runtime and received in a first step S1. The elements are determined or predicted in step S3.

Contrary to runtime, a set or stream of input documents 10 comprising known elements 20 is used as training data set for training the machine learning model.

The input document 10 for training can be specified as
Document = (List[Text], Metadata, Element)

The element to be determined 20 is important for several reasons or purposes, and thus required or appropriate actions. Exemplary actions include routing new patents or recently granted patents to the departments in charge, alerting and/or informing the responsible domain experts. The element 20 can be encoded as an atomic type such as a string or integer.

### Preprocessing S2

The raw or unprocessed input document 10 is converted into a respective numeric representation in order to be used for training and/or prediction. According to Figure 2, the text elements 12 of the input document 10 are preprocessed into processed text elements in step S2. The metadata 14 and elements do not require preprocessing and can be used without preprocessing in step S3.

If there are multiple text elements, then these can be concatenated in a sensible order, for instance title+abstract+body.

Then, the concatenated text 12 is tokenized into a sequence of text fragments [w1, w2, w3, ...] by splitting on whitespace and removing punctuation. Preferably, the text fragments are words. The words can be converted to lowercase. Accordingly, for a set of input documents 10 a corresponding set of word sequences is computed. Then, the set of words which appear at least once in any input document 10 of the input documents is determined using the set of word sequences. The resulting set of words can be referred to as the *vocabulary Vocab* of the input documents 10. Each word of the vocabulary Vocab is assigned to a respective unique integer index idx1, ..., idxn. Having computed the overall vocabulary Vocab, each word sequence [w1, w2, w3,...] is converted into a respective word index sequence [idx1, idx2, idx3, ...].

The resulting processed input document 10 can be specified as
List[Document] => List[(Idx_sequence, Metadata, Element)], Vocabulary

### Training phase

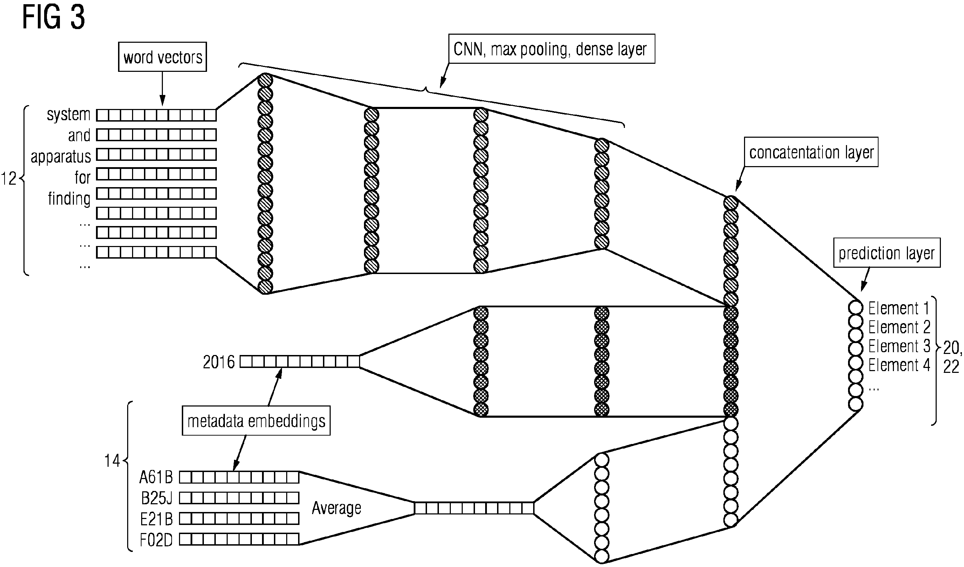

In the training phase, a set of input documents 10 is used as training data set to train the machine learning model, in particular a classification model. The classification model is a neural network in a preferred embodiment according to Figure 3. The element is used as classification target.

The machine learning model in Figure 3 receives two types of metadata 14 in addition to the text 12 of the input document 10, one single-value type, namely publication year, and one multiple-value type, namely IPC tag.

The training data set 10 can be specified as
((Idx_sequence, Pub_year, List[IPC_tag]), Element)

The machine learning model has four parts. The three input paths handle the text 12, the publication year 14 and IPC tag 14, respectively.

The text 12 uses an embedding layer to pass the word sequence into the machine learning model as a sequence of word vectors. The word vectors can encode the semantics of words. The word vectors for the input document 10 are passed to a convolutional layer, followed by a max pooling layer and two dense layers. Each of the dense layers is accompanied by a dropout layer. The series of transformations aggregates the text 12 into a representation in a hidden layer.

The metadata also uses an embedding layer to be passed into the machine learning model. These metadata embeddings are randomly initialized. Thereby, single-value metadata objects, such as the publication year, are passed to the next dense layer. The embeddings of each of the values for a given input document 10 are averaged for multi-valued metadata objects, such as the IPC tags.

The three input paths are unified using a concatenation layer, the fourth part of the model structure, which thus contains a representation of the input document 10. This representation is passed to a final prediction layer which has as many units as there are elements. The values of this prediction layer are converted to a normalized distribution via a softmax transformation. This normalized distribution is the output of the machine learning model.

The machine learning model is trained using machine learning algorithms or approaches, such as neural network:
for a given number of epochs the weights in the machine learning model are adjusted via backpropagation in order to minimize a given loss function. The loss function can be a categorical cross entropy.

The result of the training phase is a trained machine learning model or classifier which provides a predicted probability distribution over the elements which occurred in the training data set. Given a new input document *10*, the trained machine learning model transforms the preprocessed input document *10* into such a probability distribution. The transformation can be defined as:
(Idx_sequence, Pub_year, List[IPC_tag]) → List[(Element, Probability)]
such that the probabilities sum to one. The list of elements probabilities is the same length as the list of elements which were found in the training data set.

The model and the corresponding vocabulary Vocab can be written to a storage unit, e.g. persistent storage in order to be used in the runtime system during runtime.

Prediction during runtime phase S3:
The input document 10 including the processed text 12 is passed into the machine learning model to compute a probability distribution. The most likely element (the one with the highest probability) is determined based on the probability distribution.

### Further exemplary actions

A further application is an early warning system for competitors. Assuming the owner of the patent is in the metadata, and if the elements are industry fields, then the invention can maintain a score for a given set of owners (competitors or organizations which are otherwise of interest). The score is incremented each time a patent is received which is predicted to pertain to a given industry field. When the score reaches a configurable threshold an alert is issued, since that competitor has been recognized as being increasingly active in that field.

A further application is as a scoring system for merger and acquisition activity. If some organization is found to have published a patent in one of some set of industry fields of interest, their score is incremented. When the score reaches a configurable threshold an alert is issued, since that organization has been recognized as being active in a field which is relevant to merger and acquisition activity.

## Claims

1. Computer-implemented method for determining at least one element (20) in at least one input document (10), wherein the at least one element is associated with the at least one input document (10) comprising the steps of:
a. Providing the at least one input document (10), comprising text (12) and metadata (14)(S1);
b. Preprocessing the text (12) of the at least one input document (10) into processed text (12) depending on a plurality of text fragments of the text, the position and/or arrangement of the plurality of text fragments of the text (12)(S2); and
c. Determining at least one score (22) for the at least one element (20) as output data using machine learning on the basis of the at least one document (10) with the processed text (12) and unprocessed metadata (14) (S3); wherein
the at least one score (22) is the probability that the at least one input document (10) comprises the at least one element (20).

2. Method according to claim 1, wherein the at least one document (10) is a granted patent, patent application or any other patent-related document.

3. Method according to claim 2, wherein the metadata (14) comprises at least one element selected from the group, comprising:
a patent application number, a date of publication and mention of the grant of the patent, a date of filing, a proprietor, an inventor, an applicant, a date of publication of application and any other patent-related information.

4. Method according to any of the preceding claims, wherein preprocessing the text (12) of the at least one input document (10) into processed text (12) depending on a plurality of text fragments of the text, the position and/or arrangement of the plurality of text fragments of the text (12) comprises
the intermediate steps
- transforming the text (12) of the at least one input document (10) into at least one corresponding text fragment sequence,
- determining the plurality of text fragments of the at least one corresponding text fragment sequence,
- assigning a respective unique index to each text fragment of the plurality of text fragments, and
- transforming the at least one corresponding text fragment sequence into at least one corresponding text fragment index sequence using the unique indices of the plurality of text fragments, wherein the at least one corresponding text fragment index sequence is the processed text (12) .

5. Method according to claim 4, wherein the text fragment is a word, the at least one text fragment sequence is a word sequence and the at least one text fragment index sequence is a word index sequence.

6. Method according to any of the preceding claims, wherein the machine learning is a learning-based approach selected from the group, comprising
neural network, support vector machine, logistic regression and random forest.

7. Method according to any of the preceding claims, wherein the method further comprises the step of
performing at least one action depending on the determined at least one score (22).

8. Method according to claim 7, wherein the at least one action is performed, if the at least one score (22) exceeds a predefined threshold.

9. Method according to claim 7 or claim 8,
wherein the action is an element selected from the group comprising:
- Outputting the at least one input document (10) at least in part, the output data at least in part and/or any other related notification;
- Storing the at least one input document (10) at least in part, the output data at least in part and/or any other related notification;
- Displaying the at least one input document (10) at least in part, the output data at least in part and/or any other related notification; and
- Transmitting the at least one input document (10) at least in part, the output data at least in part and/or any other related notification to a computing unit for further processing.

10. A computer program product directly loadable into an internal memory of a computer, comprising software code portions for performing the steps according to any one of the preceding claims when said computer program product is running on a computer.

11. System for determining at least one element (20) in at least one input document (10), wherein the at least one element is associated with the at least one input document (10) wherein the system comprises:
a. Receiving unit for providing the at least one input document (10), comprising text (12) and metadata (14) ;
b. Preprocessing unit for preprocessing the text (12) of the at least one input document (10) into processed text (12) depending on a plurality of text fragments of the text, the position and/or arrangement of the plurality of text fragments of the text (12); and
c. Machine learning model for determining at least one score (22) for the at least one element (20) as output data using machine learning on the basis of the at least one document (10) with the processed text (12) and unprocessed metadata (14); wherein
the at least one score (22) is the probability that the at least one input document (10) comprises the at least one element (20).

12. System according to claim 11, wherein the machine learning model is a trained machine learning model, in particular a classifier.
